# EUROPEAN PATENT APPLICATION

(11) **EP 2 733 617 A1**
(43) Date of publication of application: **21.05.2014**
(21) Application number: 12806325.2
(22) Date of filing: 30.06.2012
(51) Int. Cl.: G06F 12/08, G06F 1/30

(54) **DATA BUFFER DEVICE, DATA STORAGE SYSTEM AND METHOD**

(71) Applicant: Huawei Technologies Co., Ltd., Shenzhen, Guangdong 518129 (CN)
(72) Inventor: HUANG, Jianmin, Shenzhen, Guangdong 518129 (CN); SONG, Tongling, Shenzhen, Guangdong 518129 (CN); ZHOU, Jianjun, Shenzhen, Guangdong 518129 (CN)
(74) Representative: Maiwald Patentanwalts GmbH
(86) International application number: PCT/CN2012/077991
(87) International publication number: WO 2014/000300

(57) **Abstract**

Embodiments of the present invention disclose a data cache apparatus, and a data storage system and method, where the data cache apparatus is connected to a data processing device through a data interface, and the data cache apparatus includes: a controller, and a memory that is connected to the controller; and the memory is configured to cache hot data in a hard disk that is connected to the data cache apparatus, and the controller is configured to read from or write data into the memory according to a reading/writing request of the data processing device. By using the invention, not only reading/writing performance may be affectively promoted, but also a waste of a system resource ay be avoided.

## Description

### FIELD OF THE INVENTION

The present invention relates to the field of information technologies, and in particular, to a data cache apparatus and a data storage system and method.

### BACKGROUND OF THE INVENTION

With the continuous development of a CPU (Central Processing Unit, central processing unit) of a data processing device such as a server, an original single core technology is developed to an existing multi-core multi-thread technology. However, the development of a hard disk storage device is slow due to a technical reason, and existing data reading/writing performance for a mechanical hard disk fails to keep up with CPU performance. When a CPU reads data from or writes data into a hard disk, it takes time to wait, which causes low efficiency of data service processing. The data reading/writing performance cannot be improved along with the improvement of the CPU performance.

A currently adopted cache Cache technology may solve the foregoing problem to a certain extent. In an existing Cache technology, data reading/writing Cache software and an SSD (Solid State Disk, solid state disk) storage card with a PCIE (Peripheral Component Interconnect Express, peripheral component interconnect express) interface are added between storage devices such as a server and a mechanical hard disk. The SSD storage card uses a FLASH chip as a storage medium, so that reading/writing performance for the SSD storage card is better than that for the mechanical hard disk. The server may write hot data in the mechanical hard disk into the SSD storage card through Cache software. During data query, the server first queries the SSD storage card for data, and when the data is hit, reads the data that is found through query; and when the data is not hit during the query, the server then queries the mechanical hard disk for the data. Therefore, data query may be accelerated to a certain extent, so that data reading performance is ensured.

However, the service life of a current SSD storage card is relatively short. In order to avoid an error of data that is written into the SSD storage card, the SSD storage card needs to be replaced frequently, which increases a cache cost. At the same time, the Cache software must manage and update hot data in the SSD storage card regularly. As a result, the running of the Cache software wastes a system resource, such as a CPU resource, of the server.

### SUMMARY OF THE INVENTION

Embodiments of the present invention provide a data cache apparatus and a data storage system and method, which may effectively save a cache cost on the basis of ensuring data reading performance, and furthermore, avoid a waste of a system resource.

In one aspect, an embodiment of the present invention provides a data cache apparatus, where the data cache apparatus is connected to a data processing device through a data interface, and the data cache apparatus includes: a controller, and a memory that is connected to the controller; and the memory is configured to cache hot data in a hard disk that is connected to the data cache apparatus, and the controller is configured to read data from or write data into the memory according to a data reading/writing request of the data processing device.

In another aspect, an embodiment of the present invention further provides a data storage system, including:
a data processing device, a data cache apparatus, and a hard disk, where the data cache apparatus is connected to the data processing device through a data interface,
the hard disk is connected to the data processing device and the data cache apparatus,
the data processing device is configured to read data from or write data into the data cache apparatus and/or the hard disk, and the data cache apparatus caches hot data in the hard disk, where
the data cache apparatus includes a controller, and a memory that is connected to the controller; and the memory is configured to cache the hot data in the hard disk, and the controller is configured to read data from or write data into the memory according
to a data reading/writing request of the data processing device.

Correspondingly, an embodiment of the present invention further provides a data storage method, including:
when a data reading request initiated by a data processing device is received,
querying a memory for data requested by the data reading request, and returning data that is found through query to the data processing device, where the memory caches hot data; and
when a data writing request sent by the data processing device is received, writing received data that is sent by the data processing device into the memory, and when the data that has been written into the memory satisfies a preset hard disk storage condition, transferring the data that has been written into the memory to a hard disk.

Implementation of the embodiments of the present invention has the following beneficial effects.

In the embodiments of the present invention, a combination of a controller and a memory is used in a data cache apparatus to implement data cache, so that the memory does not need to be replaced frequently, thereby reducing a cache cost, ensuring data reading/writing performance, significantly promoting the IOPS, namely, input/output (I/O) operations per second, and avoiding a waste of a system resource.

### BRIEF DESCRIPTION OF THE DRAWINGS

FIG. 1 is a schematic diagram of structural composition of a data cache apparatus according to a first embodiment of the present invention;
FIG. 2 is a schematic diagram of structural composition of a data cache apparatus according to a second embodiment of the present invention;
FIG. 3 is a schematic diagram of specific structural composition of a data cache apparatus according to an embodiment of the present invention;
FIG. 4 is a schematic diagram of structural composition of a data storage system according to an embodiment of the present invention;
FIG. 5 is a schematic diagram of specific structural composition of a controller of a data cache apparatus in the data storage system in FIG. 4;
FIG. 6 is a schematic diagram of structural composition of a data storage method according to an embodiment of the present invention;
FIG. 7 is a schematic flow chart of a data reading method of a data storage method according to an embodiment of the present invention; and
FIG. 8 is a schematic flow chart of a data writing method of a data storage method according to an embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

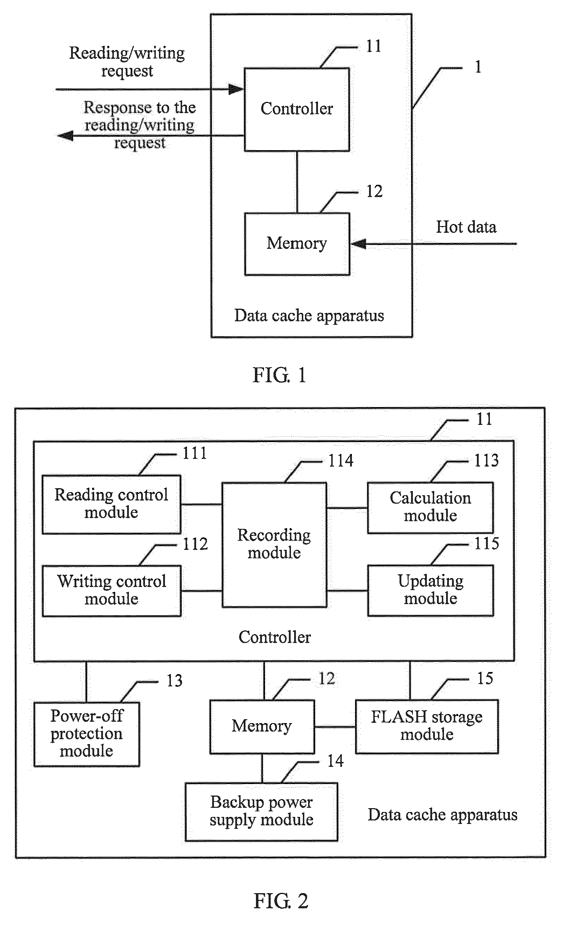

FIG. 1 is a schematic diagram of structural composition of a data cache apparatus according to an embodiment of the present invention. In this embodiment, the data cache apparatus is connected to a data processing device through a data interface such a PCIE interface, so as to perform data communication with the data processing device. The data cache apparatus includes a controller 11 and a memory 12. The controller 11 is connected to the memory 12. The memory 12 is configured to cache hot data in a hard disk that is connected to the data cache apparatus, and the controller 11 is configured to read data from or write data into the memory 12 according to a data reading/writing request of the data processing device, where the hot data may be obtained by performing calculation on the data in the hard disk through a Cache algorithm.

Data in the memory 12 is directly managed by the controller 11. The data processing device does not need to manage the data in the memory 12 of the data cache apparatus, so that the data processing device does not need to waste a system resource, such as a CPU resource, to manage the data cached in the memory 12, thereby saving a system resource of the data processing device.

The memory 12 may be a RAM (Random Access Memory, random access memory), a DRAM (Dynamic Random Access Memory, dynamic random access memory), a RDIMM (Registered Dual In-line Memory Module, registered dual in-line memory module), a LRDIMM (Load-Reduced DIMM, load-reduced DIMM), and so on.

When the data processing device needs to read or write data, the data processing device sends a corresponding request or data to the data cache apparatus through the PCIE interface. The controller 11 in the data cache apparatus queries, according to a data reading request initiated by the data processing device, the memory 12 for data requested by the data reading request, and returns data that is found through query to the data processing device; or writes, according to a data writing request sent by the data processing device, received data that is sent by the data processing device into the memory 12, and when the data that has been written into the memory 12 satisfies a preset hard disk storage condition, transfers the data that has been written into the memory to the hard disk that is connected to the data cache apparatus. The data that has been written into the memory 12 satisfies the preset hard disk storage condition, which specifically includes: When the data amount of the data that has been written into the memory 12 reaches a preset data amount threshold, the preset hard disk storage condition is satisfied. For example, when the written data reaches 1 G, the preset hard disk storage condition is satisfied. Alternatively, when the duration for writing the data into the memory 12 reaches a preset duration threshold, the preset hard disk storage condition is satisfied. For example, when the duration for writing the data into the memory 12 reaches 60 seconds, the preset hard disk storage condition is satisfied.

The hot data stored in the memory 12 is acquired, according to a pre-configured Cache algorithm, by the controller 11 from the hard disk that is connected to the data cache apparatus.

Specifically, the controller 11 may perform calculation by using the pre-configured Cache algorithm according to a hard disk storage address of data in the hard disk, where the data is acquired by the data processing device, to obtain the hot data in the hard disk, and cache the hot data into the memory 12.

After reading data from the hard disk, the data processing device sends a hard disk storage address of the read data in the hard disk to the controller 11, and the controller 11 performs calculation by using the pre-configured Cache algorithm to obtain the hot data in the hard disk and caches the hot data into the memory 12.

The data processing device may be an application server used for database query, a server used for management, such as performing recording and querying on enterprise resource data, in an ERP (Enterprise Resource Planning, enterprise resource planning) system, and so on.

In this embodiment of the present invention, a controller and a memory are disposed in a data cache apparatus. The controller completes reading or writing control over data in the memory, and a memory without any limitation on reading/writing times is used to cache corresponding data, thereby not only ensuring data reading/writing performance but also saving a cache cost. When a data processing device has a data reading/writing demand, the data processing device only needs to send a corresponding reading or writing request to the data cache apparatus, thereby saving a system resource of the data processing device.

FIG. 2 is a schematic diagram of structural composition of a data cache apparatus according to a second embodiment of the present invention. The data cache apparatus in this embodiment includes the controller 11 and the memory 12 in the foregoing first embodiment. Further, in this embodiment, the controller 11 specifically includes:
a reading control module 111 is configured to, when a data reading request initiated by a data processing device is received, query the memory 12 for data requested by the data reading request, and return data that is found through query to the data processing device. In addition, the reading control module 111 is further configured to return a query failure notification to the data processing device when data requested by the data processing device is not found by querying the memory.
a writing control module 112 is configured to, when a data writing request sent by the data processing device is received, write received data that is sent by the data processing device into the memory, and when the data that has been written into the memory 12 satisfies a preset hard disk storage condition, transfer the data that has been written into the memory to a hard disk that is connected to the data cache apparatus.

The data that has been written into the memory 12 satisfies the preset hard disk storage condition, which is: When the data amount of the data that has been written into the memory 12 reaches a preset data amount threshold, the preset hard disk storage condition is satisfied. For example, when the written data reaches 1 G, the preset hard disk storage condition is satisfied. Alternatively, when the duration for writing the data into the memory 12 reaches a preset duration threshold, the preset hard disk storage condition is satisfied. For example, when the duration for writing the data into the memory 12 reaches 60 seconds, the preset hard disk storage condition is satisfied. After the preset hard disk storage condition is satisfied, the writing control module 112 transfers the data that has been written into the memory 12 to the hard disk that is connected to the data cache apparatus. In specific implementation, the data amount threshold and the duration threshold may be determined and set according to a specific size of the memory.

The data processing device only needs to write to-be-stored data into the memory 12 of the data cache apparatus, and the writing control module 112 transfers the to-be-stored data to the hard disk according to a hard disk storage condition. The data processing device does not write the data into the hard disk directly, so that a performance requirement of high-speed data writing of a server can be completely satisfied.

Further, optionally, the controller 1 may further include a calculation module 113.

The calculation module 113 is configured to calculate hot data in the hard disk according to a pre-configured Cache algorithm, acquire the hot data from the hard disk and write the acquired hot data into the memory.

The calculation module 113 determines data in the hard disk according to the pre-configured Cache algorithm, so as to calculate and determine hot data that is frequently used in the hard disk, and pre-read the hot data to the memory 12. The pre-configured Cache algorithm may be determined according to data reading/writing operation ratios in different data processing services, and the Cache algorithm may be modified and configured flexibly to satisfy a requirement of a user. Specifically, the calculation module 113 may calculate the hot data in the hard disk according to the pre-configured Cache algorithm and a hard disk storage address that is recorded in the data cache apparatus and sent by the data processing device, acquire the hot data from the hard disk, and write the acquired hot data into the memory. When receiving a query failure notification sent by the data cache apparatus, the data processing device queries the hard disk for data, and when the data is found through query, sends a hard disk storage address of the data in the hard disk to the data cache apparatus, where the data is found through query.

The Cache algorithm is mainly to determine and obtain the hot data by alyzing a reading/writing mode of data in a data source, which, for example, may include:
(1) Based on time: for example, a LRU (Least Recently Used, least recently used) algorithm, which is to use data used for a long time in the hard disk as hot data and cache the data in the data cache apparatus by analyzing, querying and reading an address, a content and a file of the data in the data source in the hard disk.
(2) Based on a particular service mode: A service mode of a user may be dominated by a sequential reading manner or a random reading manner, and for the service mode of the user, the user may configure a Cache algorithm corresponding to the service mode. For example: for a service mode dominated by the sequential read, the configured Cache algorithm is to successively pre-read data blocks forward in the hard disk in a certain proportion according to a reading/writing address of the user, and use data saved in these data blocks as hot data and cache the data in the data cache apparatus.

Further, optionally, the controller 11 in the data cache apparatus in this embodiment may further include:
a recording module 114, configured to record a cache storage address of the data in the memory, where the data is found by the reading control module 111 through query; and
an updating module 115, configured to update, according to the cache storage address recorded in the recording module 114 and by using the pre-configured Cache algorithm, the hot data cached in the memory.

The pre-configured Cache algorithm may further be used to update the hot data cached in the memory 12, for example, to remove a content with the least used times in a preset event from the memory 12. Through the cache storage address recorded in the recording module 114, the updating module 115 may remove data that is rarely used and cached in the memory 12 from the memory 12, so as to better cache, through the memory, the hot data obtained by the calculation module 113 from the hard disk through calculation.

Further, optionally, as shown in FIG. 2, in this embodiment, the data cache apparatus may further include a power-off protection module 13, a backup power supply module 14, and a FLASH storage module 15.

The power-off protection module 13 is configured to detect a power-off event, and when a power-off event is detected, switch to the backup power supply module 14 to supply power for the data cache apparatus.

The power-off protection module 13 is further configured to report an interruption notification to the controller 11 when a power-off event is detected.

The controller 11 is further configured to write the data that is written into the memory into the FLASH storage module 15 when the interruption notification is received, and write the data in the FLASH storage module 15 into the hard disk after power is turned on normally.

In specific implementation, the backup power supply module 14 may be a super capacitor bank.

When the power-off protection module 13 detects a power-off event, a power supply connection between the data cache apparatus and the data processing device is cut off. The super capacitor bank, as the backup power supply module 14, temporarily supplies power for the data cache apparatus, and the controller 11 transfers the data in the memory to the FLASH storage module 15 timely, so as to avoid data loss of the memory 12 due to a power failure.

It can be known from the description of the foregoing embodiment that, the present invention has the following advantages:
In this embodiment of the present invention, in a data cache apparatus, a combination of a controller and a memory is used to implement data cache, so that a CPU of a data processing device can perform high-speed data reading/writing, thereby improving reading/writing performance, and significantly promoting the IOPS, namely, input/output (I/O) operations per second. Moreover, performance of a hard disk is no longer essential, so that a user may use an ordinary hard disk with a low cost, which saves a cost of a hard disk to a certain extent. At the same time, this embodiment of the present invention further provides a power-off protection module, a backup power supply module, and a FLASH storage module that does not lose data in the case of a power failure, which further ensures that even if a power-off situation occurs, data written into a memory is not lost, and after power is turned on, corresponding data can still be written into the hard disk, thereby ensuring data security.

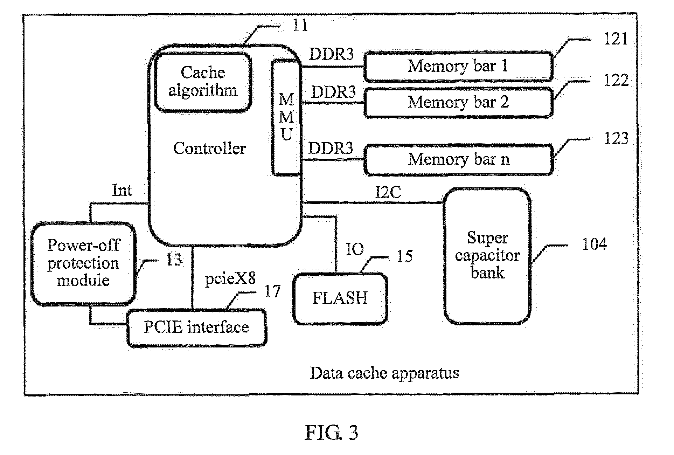

FIG. 3 is a schematic diagram of specific structural composition of a data cache apparatus according to an embodiment of the present invention. The data cache apparatus in this embodiment includes the controller 11 and the memory 12 in the foregoing second embodiment of the data cache apparatus. The memory 12 in this embodiment includes multiple RAM memory bars, such as a memory bar 121, a memory bar 122, and a memory bar 123 in the figure, a power-off protection module 13, a super capacitor bank 104 used as a backup power supply module, and a FLASH 15, configured to, when a power-off event occurs, temporarily store data cached in the memory 12. In this embodiment, the data cache apparatus is connected to a data processing device through a PCIE interface 17 to perform data communication. A built-in Cache algorithm in the controller 11 is used to update hot data in the memory 12 and calculate the Cache algorithm of the hot data in the hard disk, and the Cache algorithm may also be saved in a separate Cache algorithm storage module for the controller 11 to invoke.

It can be known from the description of the foregoing embodiment that, the present invention has the following advantages:
In this embodiment of the present invention, in a data cache apparatus, a combination of a controller and a memory is used to implement data cache, so that a CPU of a data processing device can perform high-speed data reading/writing, thereby improving reading/writing performance, and significantly promoting the IOPS, namely, input/output (I/O) operations per second. Moreover, performance of a hard disk is no longer essential, so that a user may use an ordinary hard disk with a low cost, which saves a cost of a hard disk to a certain extent. At the same time, this embodiment of the present invention further provides a power-off protection module, a backup power supply module, and a FLASH storage module that does not lose data in the case of a power failure, which further ensures that even if a power-off situation occurs, data written into a memory is not lost, and after power is turned on, corresponding data can still be written into the hard disk, thereby ensuring data security.

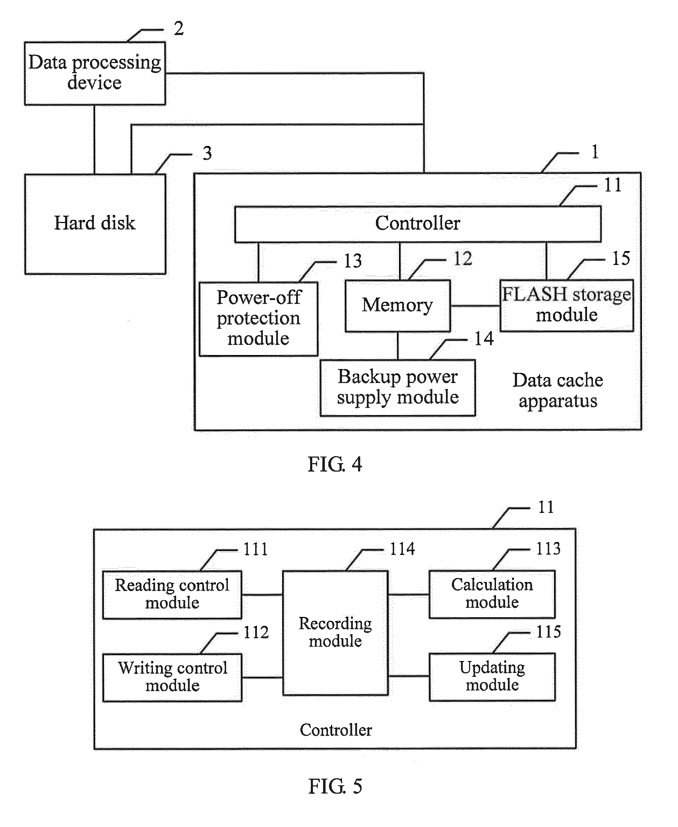

FIG. 4 is a schematic diagram of structural composition of a data storage system according to an embodiment of the present invention. The data storage system includes:
a data processing device 2, a data cache apparatus 1, and a hard disk 3, where the data cache apparatus 1 is connected to the data processing device 2 through a data interface, the hard disk 3 is connected to the data processing device and the data cache apparatus, the data processing device 2 is configured to read data from or write data into the data cache apparatus 1 and/or the hard disk 3, and the data cache apparatus 1 caches hot data; and the hot data is data that is frequently queried for and used in the hard disk 3, and the hot data in the hard disk may be obtained through calculation by using a Cache algorithm.

The data cache apparatus 1 includes a controller 11, and a memory 12 that is connected to the controller 11, where the memory 12 is configured to cache hot data that is frequently queried for and used in the hard disk 3, and the controller 11 is configured to read data from or write data into the memory 12 according to a data reading/writing request of the data processing device 2. Further, optionally, as shown in FIG. 4, in this embodiment, the data cache apparatus 1 may further include a power-off protection module 13, a backup power supply module 14, and a FLASH storage module 15.

The power-off protection module 13 is configured to detect a power-off event, and when a power-off event is detected, switch to the backup power supply module 14 to supply power for the data cache apparatus.

The power-off protection module 13 is further configured to report an interruption notification to the controller 11 when a power-off event is detected.

The controller 11 is further configured to write data that is written into the memory into the FLASH storage module 15 when the interruption notification is received, and write the data in the FLASH storage module 15 into the hard disk 3 after power is turned on normally.

In specific implementation, the backup power supply module 14 may be a super capacitor bank. When the power-off protection module 13 detects a power-off event, a power supply connection between the data cache apparatus and the data processing device 2 is cut off. The super capacitor bank, as the backup power supply module 14, temporarily supplies power for the data cache apparatus, and the controller 11 transfers the data in the memory 12 to the FLASH storage module 15 timely, so as to avoid data loss of the memory 12 due to a power failure.

Further, optionally, FIG. 5 is a schematic diagram of specific structural composition of a controller of a data cache apparatus in the data storage system in FIG. 4, where the controller 11 may specifically include:
a reading control module 111, configured to, when a data reading request initiated by the data processing device 2 is received, query the memory 12 for data requested by the data reading request, and return data that is found through query to the data processing device 2; and
a writing control module 112, configured to, when a data writing request sent by the data processing device 2 is received, write received data that is sent by the data processing device 2 into the memory 12, and when the data that has been written into the memory 12 satisfies a preset hard disk storage condition, transfer the data that has been written into the memory 12 to the hard disk 3.

The data that has been written into the memory 12 satisfies the preset hard disk storage condition, which is: When the data amount of the data that has been written into the memory 12 reaches a preset data amount threshold, the preset hard disk storage condition is satisfied. For example, when the written data reaches 1 G, the preset hard disk storage condition is satisfied. Alternatively, when the duration for writing the data into the memory 12 reaches a preset duration threshold, the preset hard disk storage condition is satisfied. For example, when the duration for writing the data into the memory 12 reaches 60 seconds, the preset hard disk storage condition is satisfied. After the preset hard disk storage condition is satisfied, the writing control module 112 transfers the data that has been written into the memory 12 to the hard disk 3. In specific implementation, the data amount threshold and the duration threshold may be determined and set according to a specific size of the memory 12.

The data processing device 2 only needs to write to-be-stored data into the memory 12 of the data cache apparatus 1, the writing control module 112 transfers the to-be-stored data to the hard disk 3 according to a hard disk storage condition, and the data processing device 2 does not write the data into the hard disk 3 directly, so that a performance requirement of high-speed data writing is completely satisfied.

Further, optionally, the controller 11 may further include a calculation module 113.

The calculation module 113 is configured to calculate hot data in the hard disk 3 according to a pre-configured Cache algorithm, acquire the hot data from the hard disk 3 and write the acquired hot data into the memory 12.

The calculation module 113 may perform calculation according to a hard disk storage address of the data in the hard disk 3 by using a pre-configured Cache algorithm, where the data is acquired by the data processing device 2, to obtain the hot data in the hard disk, and cache the hot data into the memory 12.

After reading data from the hard disk 3, the data processing device 2 sends a hard disk storage address of the read data in the hard disk 3 to the controller 11. The calculation module 113 in the controller 11 performs calculation by using the pre-configured Cache algorithm to obtain the hot data in the hard disk 3 and caches the hot data into the memory 12.

Specifically, the reading control module 111 is further configured to return a query failure notification to the data processing device 2 when data requested by the data processing device 2 is not found by querying the memory 12.

When receiving the query failure notification, the data processing device 2 queries the hard disk 3 for the data, and when the data is found through query, sends a hard disk storage address of the data in the hard disk to the data cache apparatus 1, where the data is found through query.

The controller 11 of the data cache apparatus 1 further includes a recording module 114, configured to record the hard disk storage address sent by the data processing device 2.

The calculation module 113 is specifically configured to calculate the hot data in the hard disk 3 according to the pre-configured Cache algorithm and the hard disk storage address that is recorded in the recording module 114, acquire the hot data from the hard disk 3 and write the acquired hot data into the memory.

The calculation module 113 calculates and determines data in the hard disk 3 according to the pre-configured Cache algorithm, so as to determine hot data that is frequently used among data stored in the hard disk 3, and pre-read the determined hot data to the memory 12. The pre-configured Cache algorithm may be determined according to data reading/writing operation ratios in different data processing services, and the Cache algorithm may be modified and configured flexibly to satisfy a data processing requirement of a user.

Further, optionally, the pre-configured Cache algorithm may further be used to update the hot data cached in the memory 12, for example, to remove a recently least used content from the memory 12. The recording module records a cache storage address of the data in the memory, where the data is found by the reading control module through query, so that an updating module may remove data that is rarely used and cached in the memory 12 from the memory 12, so as to better cache, through the memory, the hot data obtained by the calculation module from the hard disk through calculation.

Therefore, the recording module 114 is further configured to record the cache storage address of the data in the memory 12, where the data is found by the reading control module 111 through query. The controller 11 of the data cache apparatus 1 in this embodiment may further include: an updating module 115, configured to update, according to the cache storage address recorded in the recording module 114 and by using the pre-configured Cache algorithm, the hot data cached in the memory.

It can be known from the description of the foregoing embodiment that, the present invention has the following advantages:
In this embodiment of the present invention, a controller and a memory are disposed in a data cache apparatus. The controller completes reading or writing control over data in the memory, and a memory without any limitation on reading/writing times is used to cache corresponding data, thereby not only ensuring data reading/writing performance but also saving a cache cost. When a data processing device has a data reading/writing demand, the data processing device only needs to send a corresponding reading or writing request to the data cache apparatus, thereby saving a system resource of the data processing device.

When the data processing device needs to store data, the data processing device writes the data into the memory of the data cache apparatus directly, and the data cache apparatus transfers the data to a hard disk. Performance of the hard disk is no longer essential, so that a user may use an ordinary hard disk with a low cost, which saves a cost of a hard disk to a certain extent.

At the same time, this embodiment of the present invention further provides a power-off protection module, a backup power supply module, and a FLASH storage module that does not lose data in the case of a power failure. When a power-off situation occurs, data written into the memory may be transferred to the FLASH storage module, and is not lost. After power is turned on, the data in the FLASH storage module can still be written into the hard disk, thereby ensuring data security.

A data storage method in the present invention is described in detail in the following.

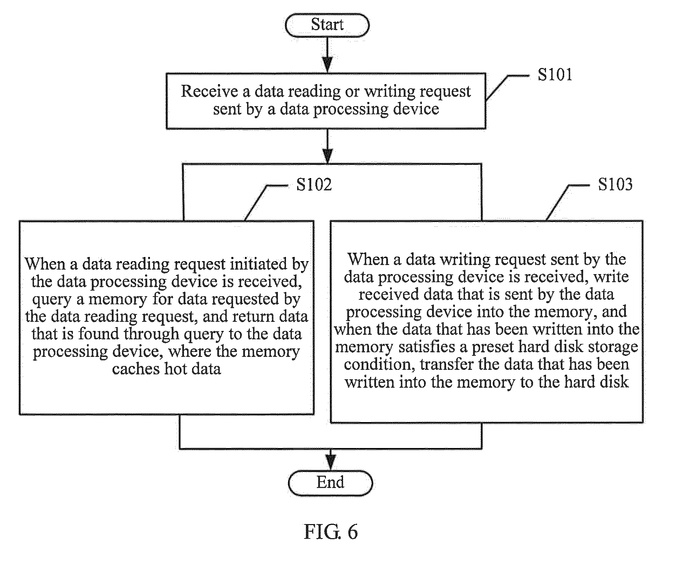

FIG 6 is a schematic diagram of structural composition of a data storage method according to an embodiment of the present invention. The method in this embodiment is applied in a storage system. The storage system consists of a data cache apparatus and hard disk storage data, where the data cache apparatus is connected to a data processing device through a data interface, such as a PCIE interface, and the hard disk is on the data processing device and the data cache apparatus. The data storage method in this embodiment includes:
S101: Receive a data reading or writing request sent by the data processing device.

When the data processing device has a data reading or data storage requirement, the data processing device sends a corresponding data reading request or data writing request to the data cache apparatus.

S102: When a data reading request initiated by the data processing device is received, query a memory for data requested by the data reading request, and return data that is found through query to the data processing device, where the memory caches hot data.

When data requested by the data processing device is not found by querying the memory, a query failure notification is returned to the data processing device.

S103: When a data writing request sent by the data processing device is received, write received data that is sent by the data processing device into the memory, and when the data that has been written into the memory satisfies a preset hard disk storage condition, transfer the data that has been written into the memory to the hard disk.

Further, optionally, the data storage method in this embodiment further includes: calculating hot data in the hard disk according to a pre-configured Cache algorithm, acquiring the hot data from the hard disk and writing the acquired hot data into the memory.

Specifically, the hot data in the hard disk may be calculated by using a Cache algorithm and according to a hard disk storage address of data that is frequently queried for and used in the hard disk, so as to write the hot data into the memory, which may specifically include:
recording a hard disk storage address sent by the data processing device, where when receiving the query failure notification, the data processing device queries the hard disk for data, and when the data is found through query, sends a hard disk storage address of the data in the hard disk, where the data is found through query; and
calculating the hot data in the hard disk according to the pre-configured Cache algorithm and the recorded hard disk storage address, acquiring the hot data from the hard disk and writing the acquired hot data into the memory.

Further, optionally, the data storage method in this embodiment further includes: updating, by using the Cache algorithm, the hot data cached in the memory. Specifically, the updating may be performed according to the Cache algorithm and a cache storage address of data that is frequently queried for and used in the memory, which specifically includes: recording a cache storage address of the data that is found by querying the memory, and updating, according to the recorded cache storage address and by using the pre-configured Cache algorithm, the hot data cached in the memory.

Further, optionally, the data storage method in this embodiment further includes: when a power-off event is detected, switching to a backup power supply module and writing the data in the memory into a FLASH storage module, and after power is turned on normally, writing the data in the FLASH storage module into the hard disk.

It should be noted that, the foregoing optional steps may be performed at any time in a running process of the data cache apparatus.

It can be known from the description of the foregoing embodiment that, the present invention has the following advantages:
In this embodiment of the present invention, in a data cache apparatus, a combination of a controller and a memory is used to implement data cache, so that the memory does not need to be replaced frequently, thereby reducing a cache cost, ensuring data reading/writing performance, and significantly promoting the IOPS, namely, input/output (I/O) operations per second.

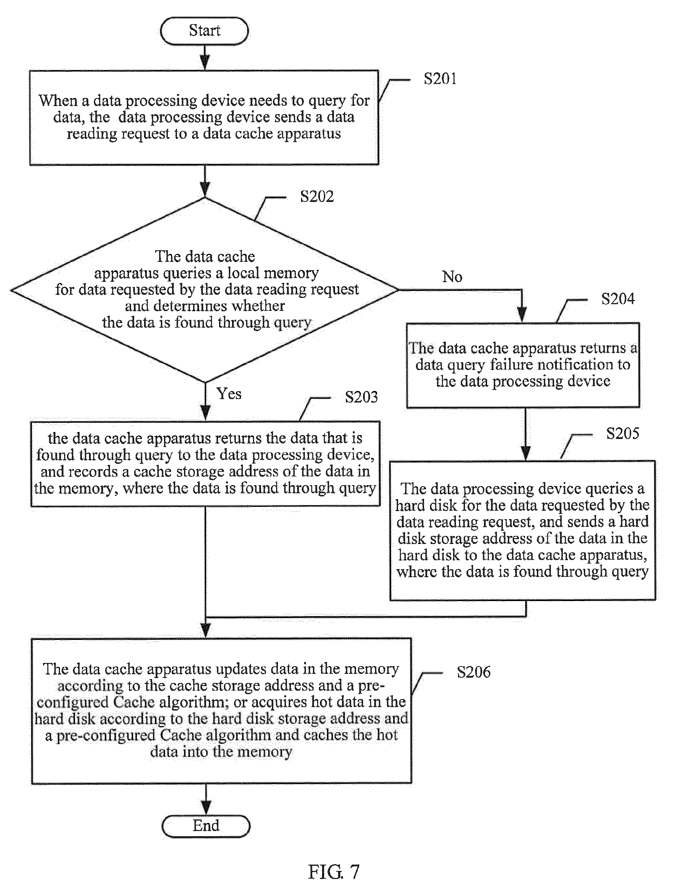

FIG. 7 is a schematic flow chart of a data reading method of a data storage method according to an embodiment of the present invention. The data reading method in this embodiment corresponds to S101 in the foregoing embodiment of the data storage method. Specifically, the data reading method in this embodiment includes:
S201: When a data processing device needs to query for data, the data processing device sends a data reading request to a data cache apparatus.
S202: The data cache apparatus queries a local memory for data requested by the data reading request and determines whether the data is found through query.
S203: When the data is found through query, the data cache apparatus returns the data that is found through query to the data processing device, and records a cache storage address of the data in the memory, where the data is found through query.
S204: When the data is not found through query, the data cache apparatus returns a data query failure notification to the data processing device.
S205: The data processing device queries a hard disk for the data requested by the data reading request, and sends a hard disk storage address of the data in the hard disk to the data cache apparatus, where the data is found through query.
S206: The data cache apparatus updates data in the memory according to the cache storage address and a pre-configured Cache algorithm; or acquires hot data in the hard disk according to the hard disk storage address and a pre-configured Cache algorithm and caches the hot data into the memory.

It can be known from the description of the foregoing embodiment that, the present invention has the following advantages:
In this embodiment of the present invention, in a data cache apparatus, a combination of a controller and a memory is used to implement data cache, so that the memory does not need to be replaced frequently, thereby reducing a cache cost, ensuring data reading performance, and significantly promoting the IOPS, namely, input/output (I/O) operations per second.

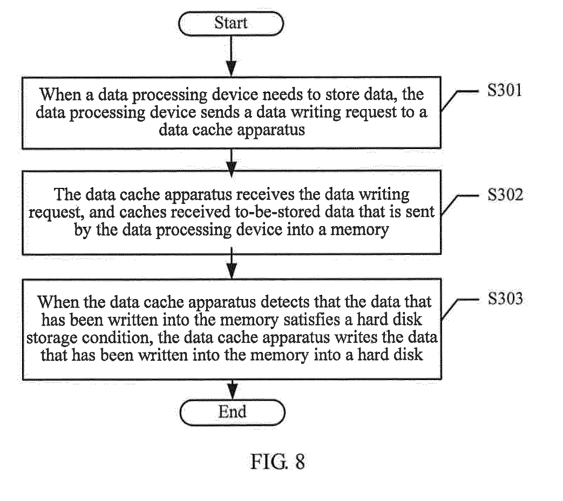

FIG. 8 is a schematic flow chart of a data writing method of a data storage method according to an embodiment of the present invention. The data writing method in this embodiment corresponds to S102 in the foregoing embodiment of the data storage method. Specifically, the data writing method in this embodiment includes:
S301: When a data processing device needs to store data, the data processing device sends a data writing request to a data cache apparatus.
S302: The data cache apparatus receives the data writing request, and caches received to-be-stored data that is sent by the data processing device into a memory.
S303: When the data cache apparatus detects that the data that has been written into the memory satisfies a hard disk storage condition, the data cache apparatus writes the data that has been written into the memory into a hard disk.

The data that has been written into the memory satisfies a preset hard disk storage condition, which specifically includes: When the data amount of the data that has been written into the memory reaches a preset data amount threshold, the preset hard disk storage condition is satisfied. For example, when the written data reaches 1 G, the preset hard disk storage condition is satisfied. Alternatively, when the duration for writing the data into the memory reaches a preset duration threshold, the preset hard disk storage condition is satisfied. For example, when the duration for writing the data into the memory reaches 60 seconds, the preset hard disk storage condition is satisfied.

It can be known from the description of the foregoing embodiment that, the present invention has the following advantages:
The data processing device only needs to write to-be-stored data into the memory of the data cache apparatus, and then transfers the to-be-stored data to the hard disk. The data processing device does not write the data into the hard disk directly, so that a performance requirement of high-speed data writing of a server can be completely satisfied. Performance of a hard disk is no longer essential. A user may use an ordinary hard disk with a low cost, which saves a cost of a hard disk to a certain extent.

Persons of ordinary skill in the art may understand that all or a part of the procedures of the methods in the foregoing embodiments may be implemented by a computer program instructing relevant hardware. The program may be stored in a computer readable storage medium. When the program is run, the procedures of the methods in the foregoing embodiments are performed. The storage medium may be a magnetic disk, an optical disk, a read-only memory (Read-Only Memory, ROM), a random access memory (Read-Only Memory, RAM), or the like.

The disclosed in the foregoing are merely exemplary embodiments of the present invention, but are not intended to limit the scope of the present invention. Therefore, equivalent variations made according to the claims of the present invention shall fall within the scope of the present invention.

## Claims

1. A data cache apparatus, **characterized in that** the data cache apparatus is connected to a data processing device through a data interface, and the data cache apparatus comprises: a controller, and a memory that is connected to the controller; and the memory is configured to cache hot data in a hard disk that is connected to the data cache apparatus, and the controller is configured to read data from or write data into the memory according to a data reading or writing request of the data processing device.

2. The data cache apparatus according to claim 1, wherein the controller comprises:
a reading control module, configured to, when a data reading request initiated by the data processing device is received, query the memory for data requested by the data reading request, and return data that is found through query to the data processing device; and
a writing control module, configured to, when a data writing request sent by the data processing device is received, write received data that is sent by the data processing device into the memory, and when the data that has been written into the memory satisfies a preset hard disk storage condition, transfer the data that has been written into the memory to the hard disk.

3. The data cache apparatus according to claim 1 or 2, wherein the controller further comprises:
a calculation module, configured to calculate the hot data in the hard disk according to a pre-configured Cache algorithm, acquire the hot data from the hard disk and write the acquired hot data into the memory.

4. The data cache apparatus according to claim 2, wherein the controller further comprises:
a recording module, configured to record a cache storage address of the data in the memory, wherein the data is found by the reading control module through query; and
an updating module, configured to update, by using a pre-configured Cache algorithm and according to the cache storage address recorded in the recording module, the hot data cached in the memory.

5. The data cache apparatus according to any one of claims 2 to 4, wherein the reading control module is further configured to return a query failure notification to the data processing device when the data requested by the data reading request is not found by querying the memory.

6. The data cache apparatus according to any one of claims 1 to 5, further comprising: a power-off protection module and a backup power supply module, wherein
the power-off protection module is configured to detect a power-off event, and when a power-off event is detected, switch to the backup power supply module to supply power for the data cache apparatus.

7. The data cache apparatus according to claim 6, further comprising: a FLASH storage module, wherein
the power-off protection module is further configured to report an interruption notification to the controller when a power-off event is detected; and
the controller is further configured to write the data that is written into the memory into the FLASH storage module when the interruption notification is received, and write the data in the FLASH storage module into the hard disk after power is turned on normally.

8. A data storage system, **characterized by** comprising:
a data processing device, a data cache apparatus, and a hard disk, wherein the data cache apparatus is connected to the data processing device through a data interface, the hard disk is connected to the data processing device and the data cache apparatus, the data processing device is configured to read data from or write data into the data cache apparatus and/or the hard disk, and the data cache apparatus caches hot data in the hard disk, wherein
the data cache apparatus comprises a controller, and a memory that is connected to the controller; and the memory is configured to cache the hot data in the hard disk, and the controller is configured to read data from or write data into the memory according to a data reading or writing request of the data processing device.

9. The system according to claim 8, wherein the controller comprises:
a reading control module, configured to, when a data reading request initiated by the data processing device is received, query the memory for data requested by the data reading request, and return data that is found through query to the data processing device; and
a writing control module, configured to, when a data writing request sent by the data processing device is received, write received data that is sent by the data processing device into the memory, and when the data that has been written into the memory satisfies a preset hard disk storage condition, transfer the data that has been written into the memory to the hard disk.

10. The system according to claim 8 or 9, wherein the controller further comprises:
a calculation module, configured to calculate the hot data in the hard disk according to a pre-configured Cache algorithm, acquire the hot data from the hard disk and write the acquired hot data into the memory.

11. The system according to claim 9, wherein the controller further comprises:
a recording module, configured to record a cache storage address of the data in the memory, wherein the data is found by the reading control module through query; and
an updating module, configured to update, according to the cache storage address recorded in the recording module and by using the pre-configured Cache algorithm, the hot data cached in the memory.

12. The system according to any one of claims 8 to 11, wherein the reading control module is further configured to return a query failure notification to the data processing device when the data requested by the data reading request is not found by querying the memory.

13. The system according claim 10, wherein when receiving a query failure notification, the data processing device queries the hard disk for data, and when the data is found through query, sends a hard disk storage address of the data in the hard disk to the data cache apparatus, wherein the data is found through query;
the recording module in the controller of the data cache apparatus is further configured to record the hard disk storage address sent by the data processing device; and
the calculation module is specifically configured to calculate the hot data in the hard disk according to the pre-configured Cache algorithm and the hard disk storage address that is recorded in the recording module, acquire the hot data from the hard disk and write the acquired hot data into the memory.

14. The system according to any one of claims 8 to 13, further comprising: a power-off protection module and a backup power supply module, wherein
the power-off protection module is configured to detect a power-off event, and when a power-off event is detected, switch to the backup power supply module to supply power for the data cache apparatus.

15. The system according to claim 14, further comprising: a FLASH storage module, wherein
the power-off protection module is further configured to report an interruption notification to the controller when a power-off event is detected; and
the controller is further configured to write data that is written into the memory into the FLASH storage module when the interruption notification is received, and write the data in the FLASH storage module into the hard disk after power is turned on normally.

16. A data storage method, **characterized by** comprising:
when a data reading request initiated by a data processing device is received, querying a memory for data requested by the data reading request, and returning data that is found through query to the data processing device, wherein the memory caches hot data; and
when a data writing request sent by the data processing device is received, writing received data that is sent by the data processing device into the memory, and when the data that has been written into the memory satisfies a preset hard disk storage condition, transferring the data that has been written into the memory to a hard disk.

17. The method according to claim 16, further comprising:
calculating hot data in the hard disk according to a pre-configured Cache algorithm, acquiring the hot data from the hard disk and writing the acquired hot data into the memory.

18. The method according to claim 16, further comprising:
recording a cache storage address of the data in the memory, wherein the data is found by querying the memory; and
updating, by using the pre-configured Cache algorithm and according to the recorded cache storage address, the hot data cached in the memory.

19. The method according to any one of claims 16 to 18, further comprising:
when the data requested by the data reading request is not found by querying the memory, returning a query failure notification to the data processing device.

20. The method according to claim 19, further comprising:
recording a hard disk storage address sent by the data processing device, wherein when receiving the query failure notification, the data processing device queries the hard disk for data, and when the data is found through query, sends a hard disk storage address of the data in the hard disk, wherein the data is found through query; and
calculating the hot data in the hard disk according to the pre-configured Cache algorithm and the recorded hard disk storage address, acquiring the hot data from the hard disk and writing the acquired hot data into the memory.

21. The method according to any one of claims 16 to 20, further comprising:
when a power-off event is detected, switching to a backup power supply module, writing the data in the memory into a FLASH storage module, and after power is turned on normally, writing the data in the FLASH storage module into the hard disk.
